**Europäisches Patentamt**

**European Patent Office**

**Office européen des brevets**

(19)

(11) **EP 1 594 069 A1**

(12) **EUROPEAN PATENT APPLICATION**

(43) Date of publication:
**09.11.2005 Bulletin 2005/45**

(51) Int Cl.⁷: $G06F\ 17/30$

(21) Application number: **04291150.3**

(22) Date of filing: **04.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicant: **Thomson Licensing S.A.**<br>**92648 Boulogne Cedex (FR)**<br><br>(72) Inventors:<br>• **Schmouker, Philippe**<br>**35830 Betton (FR)** | • **Hayes, Alan**<br>**Carmel, IN 46033 (US)**<br>• **Allie, Valerie**<br>**35230 Saint-Armel (FR)**<br><br>(74) Representative: **Schäferjohann, Volker et al**<br>**Deutsche Thomson-Brandt GmbH,**<br>**Licensing & Intellectual Property,**<br>**Karl-Wiechert-Allee 74**<br>**30625 Hannover (DE)** |

(54) **Method and apparatus for reproducing a user-preferred document out of a plurality of documents**

(57)     The developments in mass storage devices show a fast increase of the storage capacity. This allows for the recording of huge digital archives with audio, video, text, still picture, etc. documents. It's getting more and more difficult for the user to keep an overview about all these archived documents and in particular to find the user preferred documents.

The invention proposes to record a device profile in a reproduction device (14). The device profile is based on a number of document sets for classifying the documents. In the device profile it is recorded which document sets the user previously selected for reproduction in a given time of day slice (31). When the user is using the reproduction device in a given time of day slice (31), the reproduction appliance selects a document set for reproduction based on the previously recorded device profile. The user preferred document sets would thus be reproduced with higher priority.

Fig.3

EP 1 594 069 A1

## Description

The invention relates in general terms to a device profile. There is a plurality of documents available for reproduction. The device manages a statistics for the reproduced documents. This statistics is utilized to support the user in finding the user preferred documents for reproduction.

Background of the invention

With the inflationary increase of storage capacity in PC technology as well as in the CE products it is becoming more and more popular to record a complete archive of audio or video documents on a PC or CE device. E.g. a 40 GB hard disk has enough storage capacity to record 1,200 h of MP3 audio files or 160 h of MPEG4 video material or 200,000 JPEG still pictures.

Considering home networking a lot more storage capacity may be available in the network distributed among several network devices. The music or movie or still picture or Ebook etc. archives may therefore be huge and the classical approach of selecting a title for reproduction fully user controlled may become inappropriate. It is easy to imagine that it may be a problem to find a specific document among thousands of archived documents if the title, date, etc. is unknown.

From the PC technology more sophisticated browsers are known by means of which it is possible to pick some document and get a quick look at it. Also more sophisticated sorting functions are available.

Invention

In the scenario explained above, there is a need for a document access system that gives more support to the user for finding his user preferred documents, in such an environment where one user can access reproducing devices shared with many other users.

This object is solved by means of a method and an apparatus for user preferred reproducing a document out of a plurality of documents as claimed in claims 1 and 5.

It is the general idea of the invention to implement a so-called device profile in a reproducing device. For this purpose a number of document sets is provided for classifying the documents. The elements within a set have preferably one sort of similarity that can be freely defined. With this device profile it is recorded which document set the user has selected for reproduction during a certain time of day slice. The duration of a time of day slice may preferably be anything between a few minutes and one hour as an example. What is recorded then is not a user profile, but the way the device itself is used. This is called the device profile in this invention.

By means of this device profile the reproduction device can support the user to find his personally preferred documents. When the user switches on the reproduction device it will check the current time of day and it will evaluate its device profile table in which it is recorded which document set the user has most frequently used for reproduction of documents during the corresponding time of day slice. The reproduction device preferably selects the corresponding document set for reproduction and proposes it to the user.

Of course the user has full user control and can override the automatic selection of the reproduction device if he dislikes the proposal.

Further advantageous embodiments of the invention are apparent from the respective dependent claims.
In case the user dislikes one proposed document set, the reproduction device may propose another document set, whereby the order how often a set has been used for reproduction during the current time of day slice influences which other set of documents is selected / proposed for reproduction. So the most frequently used document sets according to the device profile will be taken for reproduction with higher priority.

The order of presentation of document sets does not need to be strictly predetermined according to the device profile. In one embodiment there may be a random functionality implemented in addition so that the most frequently accessed document sets are selected with the highest probability but not with 100% safety.

In a further preferred embodiment the day of week is also a parameter of the device profile. In this case a cell in the device profile is addressed by two input parameters: the day of week and the time of day slice. This provides for more flexibility in the device profile and thus for a more accurate device profile.

For the apparatus for user preferred reproducing a document out of a plurality of documents in one embodiment it is advantageous to update a reproduction counter for a document set each time a set is used for reproducing one of its documents in a given time slice. This includes increment the reproduction counter of the currently used set in case the current time of day slice ends during the reproduction of a document and the next time of day slice begins. The reproduction counter of the new time of day slice for the currently reproduced set will thus also be updated accurately.

Drawings

Exemplary embodiments of the invention are illustrated in the drawings and are explained in more detail in the description below.

In the figures:

Fig. 1    shows an example of a network scenario where the invention may be used;
Fig. 2    shows a block diagram of a reproduction device according to the invention;
Fig. 3    shows a first example of a table for implementing a device profile in a reproduction device according to the invention;
Fig. 4    shows a second example of a table for implementing a device profile in a reproduction device according to the invention, and;
shows a flow chart for a process of selecting a document set for reproduction according to the invention.

Exemplary embodiments of the invention

The invention is placed in the field of content storage, navigating and reproducing in a standalone-reproducing device or within a home-networked environment.

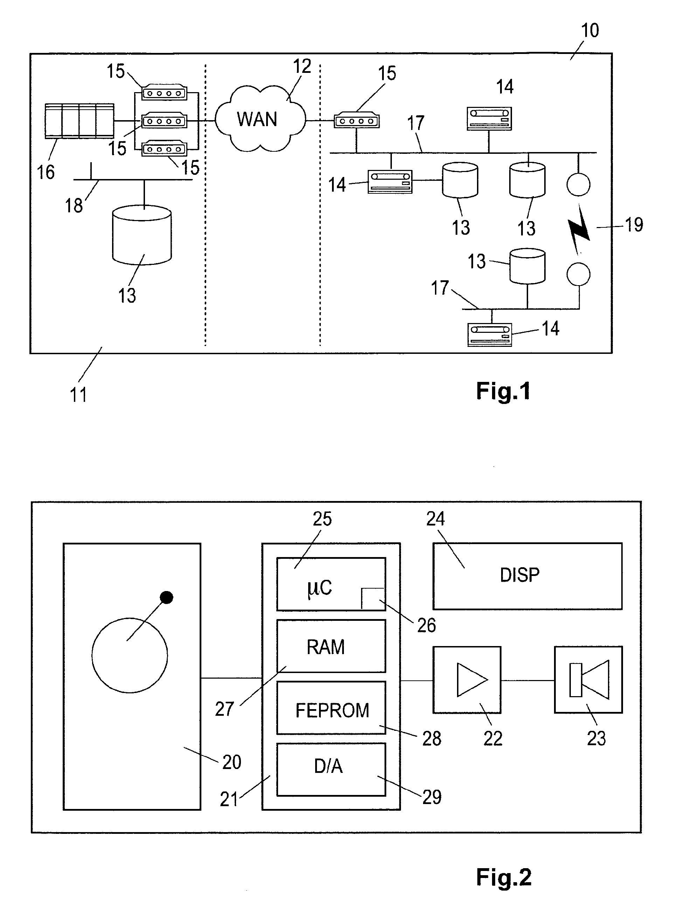

Fig. 1 shows a scenario of a home-networked environment. Reference number 10 denotes a typical home network 10 consisting of two clusters of network devices connected to each other via a wireless bridge 19. The wireless bridge 19 may be of the HIPERLAN/2 type. In both clusters the network devices are connected together via a data bus 17. Data bus 17 is e.g. an IEEE1394 bus, also called Firewire bus. There are two types of devices connected via data bus 17 in this scenario: Storage devices 13 and reproducing devices 14. Some devices may have both characteristics. An example of a pure storage device 13 is a digital home server based on a mass storage hard disk. An example of a device with both characteristics is a digital video recorder, e.g. a hard disk based digital video recorder. There are digital set top boxes on the market that are equipped with hard disk and provide digital video recorder functionality. The mass storage device does not need to be a hard disk. For archiving audio documents like MP3 files, memory cards are available having high memory capacity. A further example is an optical disk that also has high memory capacity for arching audio MP3 files or still picture JPEG files. Still further examples are magnetic tapes like D-VHS or DVC tapes. As a remark, the expressions document and file are used synonymously throughout this specification.

A reproducing device is e.g. a TV set (CRT, Plasma, LCD, Projector, DLP, OLED, etc.) that is able to reproduce video and audio content. Typical audio reproducing devices are CD-players/recorders, MP3-players/recorders, Cassette players/recorders, etc. Typical video reproducing devices are DVD players/recorders, digital VCR's, digital Camcorders, digital still cameras, etc. A personal computer can be regarded as a device having both characteristics video content reproduction and audio content reproduction.

The home network 10 may offer access to some outside network 11 via a modem 15, where storage capabilities will be offered. Between the in-house network and the outside network there may be a wide area network WAN 12 located. The most popular WAN used for this purpose is the existing World Wide Web based on Internet protocols.

Content is assumed to be composed of storable units called documents. This can be e.g. audio or video documents, still picture files, text files, or graphics files. Examples of audio files are MP3 files, Dolby AC3 files, or Dolby AAC files. Examples of video files are MPEG2 files, MPEG4 files or DIVX files. Examples of still picture files are JPEG files or HTML files. Examples of text files are Ebook files or Word files. Examples of graphics files are PDF files.

For ordering the documents a number of document sets are defined. Within a set all the documents with similar characteristic will be grouped together. This can be done automatically by means of classification algorithms that exist. In a simple embodiment the user can do the classification by hand. Examples for sets for audio documents are:

| Classic | Jazz | Rock | Pop | Rock & Roll | Folk |
|---------|------|------|-----|-------------|------|
| Country | Techno | Disco | Beat | Hip hop | Heavy Metal |
| House | Funk | Swing | Latin American | Musical | Military |

Examples for sets of video documents are:

| Action | Comedy | Adventure | Science Fiction | Western | Fantasy |
|--------|--------|-----------|-----------------|---------|---------|
| Animated | Romantic | Drama | Thriller | Nature | Children |

Examples for sets of still picture documents are:

| Summer Holiday | Garden Party | School | Kindergarten | HDVCR Conference | Cebit 2004 |
| Harley-Davidson Staff | Carnival 2004 | Best of Summer Holiday | Beautiful Trees | Portraits | Airport Visit |

For classifying text files the example of Ebooks will be taken. Here reasonable document sets may be:

| Roman | Short Story | Adventure | Science Fiction | Lyrics | Fantasy |
| Crime | Encyclopedia | Comics | Travel | Science | Art |

Another example of defining sets is using different categories of mood like Joyfulness, Happiness, Sadness, and Angriness. Each set contains documents considered to be as sufficiently nearby or similar according to some predefined criteria. This is addressed in another European patent application 03290019.3 of the applicant, and the two related European patent applications 0308110 and 0309715.

The similarities can be of any type, therefore further details to those criteria as well as any concrete classification algorithm is out of scope of this invention and therefore will not be discussed in detail here.

Sets can be distributed among the overall networked environment within any storage device in the network. In one embodiment they are each composed of a list of documents identifiers. One or more or all sets can also be recorded in a single storage device that is an integrated component of a single reproducing appliance. In order to avoid reordering of the documents a table in which the document identifiers of all the elements in the set and a pointer to the document are recorded can form a set.

A standalone reproducing device 14 can be used to play each locally stored document. Is the reproducing device 14 integrated in a network, it is possible to use this device to reproduce a document that is stored on an external device also being integrated in the network.

A standalone reproducing device is equipped with an internal clock that provides the information about the day of the week and the time of day. In the network environment a centralized clock can provide this information. In an alternative each reproducing device 14 in the network has its internal clock and all of them are synchronized by means of a high precision class clock. A detailed embodiment for this solution is disclosed in EP-A-0 650 106.

Fig. 2 shows a block diagram of a reproducing device 14. In this example an audio reproducing device is shown such as a MP3 player. The MP3-Player is equipped with hard disk drive 20 having a storage capacity of e.g. 40 GB. There is a signal-processing block 21 in the MP3-player followed by an amplifier 22 and a loudspeaker 23. For controlling the MP3-player it is equipped with a display 24. Here, a user interface will be displayed that may include browsing functionality. The signal-processing block 21 includes a micro controller 25 with integrated real time clock 26, a RAM block 27, a non-volatile memory block 28 and an D/A converter block 29. On hard disk 20 up to 10 000 (1 minute of MP3 music is about 1 MByte of storage, so for 4 minutes songs, a 40 GB HDD means about 10 000 songs) songs may be recorded. For finding the appropriate songs the signal processing block 21 includes a so-called device profile. This device profile represents somehow the favorite songs of the user. But it is not just a list of the favorite songs and goes beyond. In the device profile it is recorded what type of music the user likes at a specific point in time. With the device profile the user gets help to find the right music mostly in terms of style. But it is expressively pointed out, that the invention is not restricted to this. The device profile may be adapted to support the user in finding the appropriate music in terms of other criteria like album title, track title, genre, artist name, mood designation, etc.

For supporting the user in finding the favorite songs in terms of style, the music files are categorized by means of a plurality of document sets as explained above.

Each time a user uses a reproducing device 14 for reproducing a document the identifier of the set containing the document is associated to the day and time and a reproduction counter is incremented. The user plays with a reproducing device (e.g. audio or video device) in any room he (she) is currently in. He (she) can browse all the sets available on the network (home network as well as wider one via a modem). Browsing sets means being able to pick some characteristic documents and get a quick look at them (e.g. hearing few seconds of song clips). As soon as a set is found by the user to be satisfactory then the reproducing device starts reproducing documents within this chosen set. The order by which documents are reproduced within a set is not addressed in this invention.

In that way the device profile is trained and gets more precise. The next time the user wants to reproduce documents on this device the most played set for that day and time will be selected first to reproduce documents.

Meanwhile daytime is cut into slices over the whole week. A list of chosen sets is associated to each time slice within each reproducing device. Each time a set is chosen to be played on a reproducing device the identifier of this set is used to increment an associated reproduction counter in the corresponding time slice list. Of course, at first time of use this list is empty for each time slice. It can be reset too by the user.

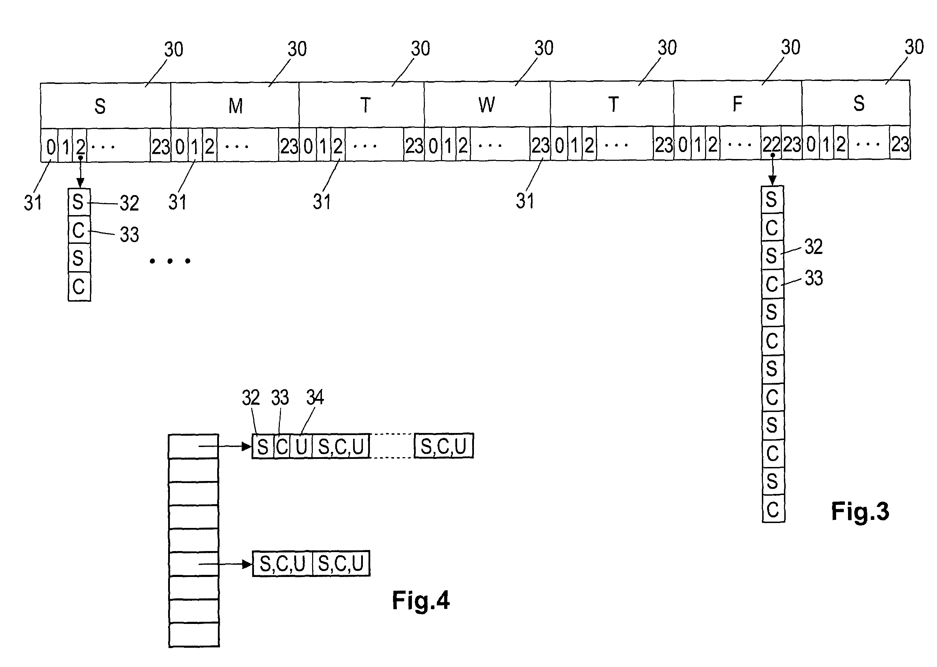

An example of the time slice list building the device profile is shown in Fig. 3. As shown, the list is in the form of a table with entries for each day of the week Sunday, Monday, Tuesday, Wednesday, Thursday, Friday, and Saturday. The time of day is cut into one-hour slices for each day of week. In a preferred embodiment the division into slices should be made finer, e.g. into 15 minute pieces. In Fig. 3 the coarse one-hour slices are shown for drawing purposes mainly. There must not be cells for each time of day in the device profile. If the user does not find it necessary to have cells also for the hours in the night, then he may do so and limit the device profile accordingly. Fig. 3 shows two entries in the cell 2 am - 3 am for Sunday and six entries in the cell 10 pm - 11 pm for Friday. There is a pair of information entries (S, C) recorded for a document set. Therein S means set identifier and C stands for the number of times the set with set identifier S has been used to reproduce documents in the assigned time of day slice for that day of week. The order in which the set information entries (S, C) are recorded for a given time of day slice may be representative for the frequency a set has been used for reproducing documents. This table is recorded in the non-volatile memory 28 of the signal-processing block 21.

In order to avoid misinterpretation for the case that more than one user are allowed to use one single reproducing device 14, an extended version of the device profile could also record a user identifier (U) in each time slice cell as depicted in Fig. 4.

When a device profile containing reproducing device 14 is used, the device will first select the mostly played set for the current time of day slice. It may then propose sets in a decreasing order on their counts for this current time of day slice, or may propose them in any other order.

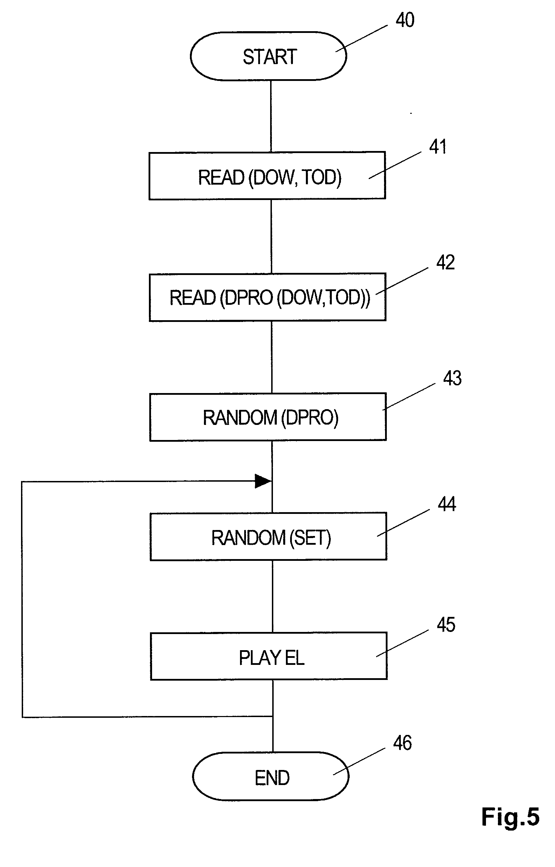

This behavior is exemplified in Fig. 5. Each time the user runs the reproducing device a program routine according to the flow chart in Fig. 5 is executed. Reference number 40 denotes the program start. Reference number 41 denotes a step where the current day of week and time of day is read. The real time clock 26 will be accessed for this purpose. In step 42 the device profile is accessed. The current day of week and time of day are used as input parameters that determine which cell in the device profile shall be evaluated. In step 43 a document set is selected for reproduction. In the easiest embodiment the document set that has been played most in this time slice is selected. A more sophisticated embodiment applies a random function for the selection. The random function should be adapted to the order the document sets are recorded in the device profile for a time slice, i.e. the often-used document set is selected more often than the other document sets. In step 44 a single document will be determined by means of another implemented random function. This document will be reproduced in step 45. Steps 44 and 45 are repeated each time an element has been played as long as the user does not interrupt reproduction so that the program routine ends in step 46. Of course the additional feature could be implemented in another embodiment that with user interactivity the proposed set and/or the proposed element of the set could be rejected and modified by the user.

Below, an algorithm for a semi-randomly determination of documents from document sets within one time slice is proposed. This algorithm proposes, just as examples of random functions, 3 different functions with three different results on the way sets will be proposed for reproducing.

For $n_i$ the played count of the $i$-th set for some time slice, $n_i > 0$ (that is, not yet reproduced sets will get a $n_i$ set to 1) :

- Rank every set in the decreasing order of their played counts, and reproduce first a document from the "most preferred" set (in a prefixed or random order for sets with the same rank).

- or For N the sum of all the $n_i$ associated to the sets, let's say $p_i$ is the probability that set i will be reproduced :

$$p_i = n_i / N$$

The reproducing order will be random, based on this probability of reproducing.
This function will mostly propose first preferred sets within not many sets.

- or For $N$ the sum of all the $x_i$ associated to the sets, and for $k$ any coefficient being equal to 2 or more, we call $p_i$ the probability of reproducing the $i$-th set and we define it as :

$$p_i = x_i / N \text{ with } x_i = f(n_i)$$

where $f(n_i)$ could be for example :

$$f(n_i) = n_i^{k}$$

with $k \geq 2$, or

$$f(n_i) = \exp ( k \times n_i )$$

with $k \geq 1$, etc.

The reproducing order will be random, based on this probability of reproducing.

This function will better play first preferred sets within many sets.

In this algorithm, the point with the first bullet rules that the most reproduced set will always be proposed first, that the second most proposed one will always be proposed then, and so on. When a couple of sets rank the same, it is proposed to sub-rank them with some random function or without.

The point with the second bullet rules that the preferred sets will be mainly proposed first when not too much sets are available, while such preferred sets will not be often proposed first when a large number of sets are available. The reason for this is that the probability of a set to be proposed first is a perfect linear function of its already-played-counter. This means that when not too much sets are available, the most played ones will get really greater opportunities to be proposed first.

The point with the third bullet rules that the preferred sets will be mainly proposed first when many sets are available, and that they will get huger opportunities to be played first when not too much sets are available. The reason for this is that here the probability is an exponential function of the already-played-counter, and no more a linear one!

The device profile is permanently refined. Should the current time slice end during reproduction of documents, and the next one begin, then the identifier 32 of the currently played set will be used to increment its corresponding reproduction counter 33 in the associative list for this new time slice 31.

Coding a set identifier within 8 bits permits the definition of 256 sets. Coding such identifiers within 16 bits permits the definition of 65,536 sets.

A document identifier could be coded with 16, 32, 64 or 128 bits.

Each Set is associated with a list of the document identifiers it contains.

For each time slice the list of sets already played can be in the form of an associated memory array or an hash table indexed on set identifiers and giving the played count for each played set as an alternative.

A further enhancement allows the user to choose the "name" of the time period, such as "Dinner" or "Bedtime"... This way the Reproducing Device will allow a more personal view and also take into account the shift worker whose sleep and meal hours are not traditional!

Such a further application to "named" time periods is the future (very near term these days) of a voice-activated experience, like "Play dinner music, volume low."

Then:

1) The "Most Played" set will play for that time period and that location.

2) If the voice recognition is accurate enough, the play list will be selected for the specific user. So possibly the general enhancement that could be done, is to apply discrete codes for specific users within the time periods; the codes and recognition patterns owned and managed by the system itself. This leads to the adding of some user identifier in the list of played sets for each time slice within each reproducing device as shown in Fig. 4.

**Claims**

1. Method for user preferred reproducing a document out of a plurality of documents, wherein a number of sets of documents are defined for classifying the documents, **characterized by** the steps of:

determining the time of day,
selecting a set of documents based on a characteristic regarding the plurality how often the set has been used for reproduction of one of its documents during a corresponding time of day slice,
automatically or user-controlled starting of reproducing a document within the selected set of documents.

2. Method according to claim 1, wherein if the user refuses reproduction of documents from the selected set of documents another set of documents is selected and proposed for reproduction, whereby the order how often a set has been used for reproduction during the corresponding time of day slice (31) influences which other set of documents is selected/proposed for reproduction.

**3.** Method according to claim 1 or 2, wherein a random function additionally influences the process of selecting and proposing a set of documents for reproduction.

**4.** Method according to one of claims 1 to 3, wherein the day of week is additionally determined and taken into account for selecting a set of documents for reproduction during the corresponding time of day slice (31).

**5.** Apparatus for user preferred reproduction of a document out of a plurality of documents, comprising means for accessing a number of documents stored on a storage medium (20), wherein a number of sets of documents is provided for classifying the documents, **characterised in that** a table of document set information is provided in which the plurality how often a set has been called for reproduction one of its documents during a given time of day slice (31) is recorded, and wherein a document selector is provided that accesses the table of document set information for determining which document set shall be selected for reproducing a document at the given time of day and, further comprising means for automatically or user controlled starting reproduction of a document within the selected set of documents.

**6.** Apparatus according to claim 5, wherein the table includes for each time of day slice (31) a number of information entry pairs, each pair consisting of a set identifier (32) and a reproduction counter (33) representing the number how often the corresponding set has been used for reproduction of one of its documents during that time of day slice (31).

**7.** Apparatus according to claim 5, wherein the table includes for each time of day slice (31) a number of information entries, each entry consisting of a set identifier (32), a reproduction counter (33) and a user identifier (34) representing the number how often the corresponding set has been used for reproduction of one of its documents by that user during that time of day slice (31)

**8.** Apparatus according to one of claims 5 to 7, wherein the table of document set information is indexed with two parameters, namely day of week and time of day.

**9.** Apparatus according to one of claims 5 to 8, wherein the document selector is designed to select another set of documents for reproduction one of its documents if the user refuses to reproduce documents from the first selected set of documents, whereby the order how often a set has been used for reproduction during the corresponding time of day slice (31) influences which other set of documents is selected/proposed for reproduction.

**10.** Apparatus according to claim 9, wherein the document selector has implemented a random function that additionally influences the process of selecting a set of documents for reproduction.

**11.** Apparatus according to one of claims 5 to 10, wherein a document has assigned a document identifier and a set has assigned a set identifier (32) and a set is created by means of recording a full chained pointer list for the documents included in the set.

**12.** Apparatus according to one of claims 6 to 11, comprising means for updating the reproduction counter (33) each time a set is used for reproducing one of its documents in a given time slice (31).

**13.** Apparatus according to one of claims 5 to 12, wherein a document is a video document or an audio document or a text document or a still picture document or a graphics document, in particular PDF-document.

**Fig.1**

**Fig.2**

| | S | | M | | T | | W | | T | | F | | S |
|---|---|---|---|---|---|---|---|---|---|---|---|---|---|

| 0 | 1 | 2 | ··· | 23 | 0 | 1 | 2 | ··· | 23 | 0 | 1 | 2 | ··· | 23 | 0 | 1 | 2 | ··· | 23 | 0 | 1 | 2 | ··· | 23 | 0 | 1 | 2 | ··· | 22 | 23 | 0 | 1 | 2 | ··· | 23 |

S
C
S
C

32
33

· · ·

S
C
S
C
S
C
S
C
S
C
S
C

32
33

**Fig.3**

32 33 34

| S | C | U | S,C,U | ┈ | S,C,U |

| S,C,U | S,C,U |

**Fig.4**

START — 40

READ (DOW, TOD) — 41

READ (DPRO (DOW,TOD)) — 42

RANDOM (DPRO) — 43

RANDOM (SET) — 44

PLAY EL — 45

END — 46

**Fig.5**

Application Number

EP 04 29 1150

**European Patent**
**Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 192 340 B1 (ABECASSIS MAX) 20 February 2001 (2001-02-20) * abstract * * column 3, line 1 - line 4 * * column 9, line 66 - column 10, line 2 * * column 20, line 32 - line 36 * * column 24, line 65 - column 25, line 58 * | 1-13 | G06F17/30 |
| X | US 2003/050997 A1 (HICKEY RICHARD J ET AL) 13 March 2003 (2003-03-13) * paragraph [0014] - paragraph [0024] * * paragraph [0035] * | 1-13 | |
| X | US 6 611 813 B1 (BRATTON TIMOTHY ROBERT) 26 August 2003 (2003-08-26) * column 1, line 48 - column 2, line 27 * | 1,5 | |
| X | US 2002/022453 A1 (BALOG HORIA ET AL) 21 February 2002 (2002-02-21) * paragraph [0029]; figure 2 * | 1,5 | |

TECHNICAL FIELDS SEARCHED (Int.Cl.7)

G06F
G11B

The present search report has been drawn up for all claims

| Place of search | Date of completion of the search | Examiner |
|---|---|---|
| Berlin | 23 September 2004 | Deane, E |

**ANNEX TO THE EUROPEAN SEARCH REPORT
ON EUROPEAN PATENT APPLICATION NO.**                     EP 04 29 1150

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2004

| Patent document cited in search report | | Publication date | Patent family member(s) | | Publication date |
|---|---|---|---|---|---|
| US 6192340 | B1 | 20-02-2001 | NONE | | |
| US 2003050997 | A1 | 13-03-2003 | WO | 02087214 A2 | 31-10-2002 |
| US 6611813 | B1 | 26-08-2003 | AU | 3349500 A | 07-08-2000 |
| | | | WO | 0044171 A1 | 27-07-2000 |
| | | | US | 2003105678 A1 | 05-06-2003 |
| US 2002022453 | A1 | 21-02-2002 | AU | 4219601 A | 15-10-2001 |
| | | | WO | 0176170 A2 | 11-10-2001 |

For more details about this annex : see Official Journal of the European Patent Office, No. 12/82